# EUROPÄISCHE PATENTANMELDUNG

(11) **EP 4 439 384 A1**
(43) Veröffentlichungstag der Anmeldung: **02.10.2024**
(21) Anmeldenummer: 24159401.9
(22) Anmeldetag: 23.02.2024
(51) Int. Cl.: G06N 3/008, G06N 3/092, G06N 3/096

(54) **VIRTUELLES TRAININGSVERFAHREN FÜR EIN NEURONALES NETZ ZUR ANSTEUERUNG EINER TECHNISCHEN VORRICHTUNG**

(30) Priorität: 27.03.2023 US 202318190187
(71) Anmelder: dSPACE GmbH, 33102 Paderborn (DE)
(72) Erfinder: Grotenhöfer, Steffen, 33102 Paderborn (DE)

(57) **Zusammenfassung**

Ein Verfahren zu Training eines neuronalen Netzes zur Ansteuerung einer technischen Vorrichtung in einer virtuellen Trainingsumgebung. Das Verfahren umfasst eine Einrichtung einer ersten Datenverbindung zwischen dem neuronalen Netz und einer ersten Simulation der technischen Vorrichtung und ein anschließendes Training des neuronalen Netzes durch Ansteuerung der ersten Simulation. Nach Erreichung eines ersten Trainingsziels wird die erste Datenverbindung getrennt und eine zweite Datenverbindung zwischen dem neuronalen Netz und einer zweiten Simulation der technischen Vorrichtung eingerichtet, um das neuronale Netz durch Ansteuerung der zweiten Simulation zu trainieren. Die zweite Simulation ist realistischer ausgestaltet als die erste Simulation und erfordert durch ihren höheren Realismus mehr mathematische Operationen für einen Simulationsdurchlauf.

## Beschreibung

Neuronale Netzwerke haben in jüngerer Zeit enorme Fortschritte in der Entwicklung autonomer Systeme bewirkt, die eigenständig komplexe Bewegungsabläufe oder Überwachungsaufgaben in einer veränderlichen Umwelt durchführen können. Problematisch ist dabei aber die große Menge an Trainingsdaten, die erforderlich ist, um ein neuronales Netz hinreichend zu trainieren, insbesondere dann, wenn das neuronale Netz für eine sicherheitskritische Aufgabe vorgesehen ist, in der eine Fehlerkennung katastrophale Folgen haben kann. Beispiele sind ein für den Straßenverkehr vorgesehenes autonomes Fahrzeug, eine intelligente Überwachungskamera, die in einem Badesee Ertrinkende erkennt, oder ein Suchroboter, der Areale oder Gebäude nach verletzten Menschen durchsucht. Derartige Systeme benötigen nicht nur besonders große Mengen an diversen Trainingsdaten, um Fehlfunktionen durch zu wenig oder zu einseitiges Training bestmöglich auszuschließen, die Trainingsdaten müssen auch große Mengen von Daten enthalten, die katastrophale oder kritische Szenarien darstellen, für deren zuverlässige Erkennung und Bearbeitung das neuronale Netz trainiert werden soll. Da eben solche Szenarien ihrer Natur nach selten auftreten, sind entsprechende Datenaufnahmen selten, wodurch die Zusammentragung hinreichend vieler Trainingsdaten einen enormen Aufwand darstellt.

Ein im Stand der Technik bekannter Vorschlag zur Lösung dieses Problems ist die Erzeugung synthetischer Trainingsdaten durch Computersimulation. Szenarien zum Training eines neuronalen Netzes werden dabei in einer virtuellen Umwelt nachgestellt und auf Basis der nachgestellten Szenarien Trainingsdaten in einer für das neuronale Netz verständlichen Form erzeugt. Virtuelle Szenarien lassen sich auf einfache Weise nach Belieben variieren. Im Allgemeinen bilden die synthetischen Daten die realen Daten aber nicht perfekt nach, wodurch grundsätzlich die Gefahr besteht, dass das neuronale Netz sich an die synthetischen Trainingsdaten gewöhnt und für einen Einsatz in der realen Welt nur unzureichend trainiert wird.

Der Fachaufsatz "Synthetic Data for Deep Learning" von Sergey I. Nikolenko (2019) enthält einen umfassenden Überblick über den entsprechenden Stand der Technik. Dort finden sich unterschiedliche Beispiele für erfolgreich in virtuellen Umgebungen trainierte neuronale Netze.Dabei handelt es sich aber um akademische Studien, die nur die grundsätzliche Möglichkeit beweisen. Es gilt weiterhin, dass ein mit synthetischen Daten trainiertes neuronales Netz umso zuverlässiger ist, je realitätsnäher die synthetischen Trainingsdaten ausgestaltet sind.

Die Erfindung betrifft das Training neuronaler Netze zur Ansteuerung einer technischen Vorrichtung mittels synthetischer Trainingsdaten. Handelt es sich dabei um eine technische Vorrichtung mit hohen Ansprüchen an die Sicherheit, also beispielsweise ein hochautomatisiertes Fahrzeug, dann müssen für das Training synthetische Trainingsdaten mit einem hohen Grad an Realismus verwendet werden, um sicherzustellen, dass die in der virtuellen Umwelt erlernten Fähigkeiten des neuronalen Netzes auf die reale Welt übertragbar sind. Es muss demnach eine virtuelle Simulation der technischen Vorrichtung bereitgestellt werden, die dem neuronalen Netz eine hervorragende, nach Möglichkeit perfekte Illusion vermittelt, die technische Vorrichtung in der Realität anzusteuern. Die Realitätsnähe eines Simulationsmodells ist aber antiproportional zu seiner Ausführungsgeschwindigkeit, denn ein Simulationsmodell einer technischen Vorrichtung verhält sich umso realistischer, je mehr technische Komponenten der Vorrichtung, physikalische Phänomene und Wechselwirkungen in der Simulation berücksichtigt werden. Damit steht die Anforderung nach einem möglichst hohen Realismus im Konflikt mit der Anforderung einer möglichst hohen Ausführungsgeschwindigkeit der Simulation, um das Training in vertretbarer Zeit abschließen zu können.

Vor diesem Hintergrund besteht die Aufgabe der Erfindung darin, das Training eines neuronalen Netzes zur Ansteuerung einer technischen Vorrichtung in einer virtuellen Trainingsumgebung zu beschleunigen.

Die Patentveröffentlichung DE 10 2018 220 865 A1 schlägt ein Trainingsverfahren vor, das in einer rein virtuellen Trainingsumgebung beginnt und die virtuelle Trainingsumgebung schrittweise durch eine reale Trainingsumgebung ersetzt, um das neuronale Netz in den späteren Trainingsphasen schrittweise an die komplexere reale Welt zu gewöhnen. Das Verfahren ermöglicht zwar den Einsatz einer relativ einfachen Simulation, ist aber in den späteren Trainingsphasen auf reale Trainingsdaten angewiesen, mit den damit verbundenen, zuvor genannten Nachteilen.

Die Erfindung ist ein Verfahren zum Training eines neuronalen Netzes zur Ansteuerung einer technischen Vorrichtung sowie eine virtuelle Trainingsumgebung zur Durchführung des Verfahrens. Erfindungsgemäß vorgesehen ist eine Einrichtung einer ersten Datenverbindung zwischen einem zu trainierenden neuronalen Netz und einer ersten Simulation der technischen Vorrichtung. Dazu ist die erste Simulation mit einer ersten Datenschnittstelle ausgestattet, mittels derer das neuronale Netz Zustandsdaten aus der ersten Simulation auslesen und Steuerdaten an die erste Simulation übermitteln kann.

Vorzugsweise bildet die erste Datenschnittstelle eine reale Datenschnittstelle der technischen Vorrichtung nach, die das neuronale Netz nach Abschluss und Validierung seines Trainings zur Ansteuerung der realen technischen Vorrichtung nutzen soll. Unter Zustandsdaten sind Daten zu verstehen, die dem neuronalen Netz Informationen über einen Ist-Zustand der technischen Vorrichtung vermitteln, die das neuronale Netz zur Ansteuerung der technischen Vorrichtung benötigt. Unter Steuerdaten sind Daten zu verstehen, die geeignet sind, den Ist-Zustand der technischen Vorrichtung in Richtung eines durch das neuronale Netz vorgegebenen Soll-Zustands der technischen Vorrichtung zu verändern. Handelt es sich bei der technischen Vorrichtung beispielsweise um ein Landfahrzeug, dann sind Beispiele für mögliche Zustandsdaten ein Abstand von einer Fahrbahnseitenlinie, eine Geschwindigkeit des Fahrzeugs, ein Abstand von einem vorausfahrenden Fahrzeug, ein eingelegter Gang ein Wankwinkel des Fahrzeugs oder eine Beschreibung der Fahrzeugumgebung, und Beispiele für mögliche Steuerdaten sind ein Lenkwinkel, eine Öffnung einer Drosselklappe oder eine Bremskraft.

Weiterhin vorgesehen ist eine Festlegung eines ersten Trainingsziels für eine Ansteuerung der ersten Simulation und ein Training des neuronalen Netzes durch Ansteuerung der ersten Simulation durch das neuronale Netz, mit einem regelmäßigen Abgleich des Trainingsfortschritts des neuronalen Netzes mit dem ersten Trainingsziel.

Das Training des neuronalen Netzes mit der ersten Simulation wird erfindungsgemäß fortgesetzt, bis das neuronale Netz das erste Trainingsziel erreicht. Nach Erreichung des ersten Trainingsziels wird die erste Datenverbindung getrennt und eine zweite Datenverbindung zwischen dem neuronalen Netz und einer virtuellen zweiten Simulation eingerichtet. Die zweite Simulation ist realistischer ausgestaltet als die erste Simulation und erfordert durch ihren höheren Realismus mehr mathematische Operationen für einen Simulationsdurchlauf als die erste Simulation. Die Einrichtung der zweiten Datenverbindung erfolgt mittels einer zweiten Datenschnittstelle der zweiten Simulation zur Auslesung von Zustandsdaten aus der zweiten Simulation und zur Übermittlung von Steuerdaten an die zweite Simulation.

Ein Simulationsdurchlauf bezeichnet eine vollständige Ausführung eines Simulationsschritts, insbesondere eines Zeitschritts, einer Simulation.

Erfindungsgemäß wird also in der frühen Phase des Trainings ein relativ einfaches, aber dafür schnelles Simulationsmodell der technischen Vorrichtung verwendet. Sobald das neuronale Netz die Ansteuerung des einfachen Simulationsmodells zufriedenstellend meistert, was durch das erreichte Trainingsziel indiziert wird, wird das einfache Simulationsmodell durch ein komplexeres und langsameres, aber dafür realistischeres Simulationsmodell ersetzt und das Training durch Ansteuerung der zweiten Simulation durch das neuronale Netz fortgesetzt.

Die Erfindung beruht auf der Annahme, dass in den frühen Trainingsphasen keine allzu große Realitätsnähe des Simulationsmodells erforderlich ist, weil das neuronale Netz zu dieser Zeit noch mit dem Erlernen der Grundlagen beschäftigt ist. Zur beispielhaften Erläuterung sei angenommen, das neuronale Netz solle anhand des erfindungsgemäßen Verfahrens für die Lenkung eines autonomen Straßenfahrzeugs trainiert werden. Das untrainierte neuronale Netz müsste zunächst einmal verstehen, worin überhaupt seine Aufgabe besteht (das Fahrzeug zwischen der rechten Randlinie und der Mittellinie zu halten) und wie es diese Aufgabe grundlegend bewältigt (ein negativer Lenkwinkel lässt das Fahrzeug nach links fahren, ein positiver Lenkwinkel nach rechts).

Für die Erlernung dieser Grundlagen genügt eine sehr einfache Simulation des Fahrzeugs. Sobald das neuronale Netz sie zufriedenstellend erlernt hat, wird die erste Simulation durch eine zweite Simulation des Fahrzeugs ersetzt, die komplexere Phänomene berücksichtigt, beispielsweise Wankwinkel, Kurveninstabilität, Fahrkomfort, Glätte oder Seitenwind. Die Idee der Erfindung ist eine spezielle Anwendung des sogenannten transferierenden Lernens (*transfer learning*)*,* bei der eine bereits gelernte Fähigkeit eines neuronalen Netzes als Vorteil zum Erlernen einer anderen Fähigkeit (hier: der Ansteuerung einer realitätsnäheren Simulation) genutzt wird. In Trainingsszenarien, in denen aus Sicherheitsgründen sehr komplexe, realitätsnahe Simulationen für das Training eingesetzt werden müssen, bewirkt die Erfindung eine erhebliche Zeitersparnis.

Vorteilhaft wird für die Ansteuerung der zweiten Simulation ein zweites Trainingsziel festgelegt und das neuronale Netz so lange durch Ansteuerung der zweiten Simulation trainiert, bis das zweite Trainingsziel erreicht ist. Dafür wird während der Ansteuerung der zweiten Simulation der Trainingsfortschritt des neuronalen Netzes mit dem zweiten Trainingsziel abgeglichen. Das zweite Trainingsziel kann mit dem ersten Trainingsziel identisch sein oder sich von dem ersten Trainingsziel unterscheiden. Nach Erreichung des zweiten Trainingsziels kann das Training als abgeschlossen betrachtet und eine physische Datenverbindung zwischen dem neuronalen Netz und der technischen Vorrichtung in der realen Welt eingerichtet werden, um das Training des neuronalen Netzes in der realen Welt zu validieren. Natürlich ist es aber auch möglich, vor der Validierung in der realen Welt das Training in der virtuellen Trainingsumgebung durch Ansteuerung einer dritten Simulation und beliebig vieler weiterer Simulationen der technischen Vorrichtung fortzusetzen, wobei der Realismus jeder Simulation der technischen Vorrichtung jeweils gegenüber der Vorgängersimulation erhöht ist. Die Beendigung der Ansteuerung einer Simulation nach Erreichung des jeweiligen Trainingsziels und der Übergang zur Ansteuerung der jeweils nächsten Simulation geschieht jeweils auf analoge Weise wie am Beispiel der ersten Simulation und der zweiten Simulation erläutert.

Die erste Datenschnittstelle und die zweite Datenschnittstelle sind bevorzugt identisch ausgestaltet, sodass die erste Datenverbindung unmittelbar und ohne Modifikationen des von dem neuronalen Netz betriebenen Datenaustauschs durch die zweite Datenverbindung ersetzbar ist.

Die Simulation der technischen Vorrichtung umfasst vorteilhaft eine Erzeugung simulierter Sensordaten, die Informationen über eine virtuelle Umwelt der technischen Vorrichtung enthalten. Welcherart diese Sensordaten sind, hängt natürlich von der technischen Vorrichtung ab sowie von der Aufgabe, zu deren Erfüllung das neuronale Netz trainiert wird. Bei den Sensordaten kann es sich beispielsweise um eine Objektliste handeln, die auf Basis simulierter beweglicher oder statischer Objekte in der virtuellen Umwelt erzeugt wird, um Fahrspurbegrenzungen, eine auf Polygonen basierende Nachbildung von Oberflächen in der Umwelt, oder um Rohdaten eines bildgebenden Sensors, insbesondere einer Kamera, eines Lidars, eines Radars oder einer Echoortung. Die virtuellen Sensordaten werden dem neuronalen Netz übermittelt und das neuronale Netz trainiert, die Sensordaten auszuwerten und bei der Ansteuerung der jeweiligen Simulation und letztlich der technischen Vorrichtung zu berücksichtigen.

Die simulierten Sensordaten müssen natürlich in einem Format erzeugt werden, das für das neuronale Netz verständlich ist, insbesondere in dem gleichen Format, in dem auch die realen Sensordaten in der technischen Vorrichtung vorliegen. Für die glaubhafte Simulation von Sensordaten auf Basis einer virtuellen Umwelt liegen im Stand der Technik Lösungen vor, siehe z.B. der Fachaufsatz "Development of Full Speed Range ACC with SiVIC, a virtual platform for ADAS Prototyping, Test and Evaluation", Dominique Gruyer et al., IEEE Intelligent Vehicle Symposium (2013).

In einer Ausbaustufe der Erfindung ist es auch möglich, parallel zur Erhöhung der Komplexität der Simulation der technischen Vorrichtung auch Änderungen der virtuellen Umwelt vorzunehmen. Dabei kann es sich um rein geometrische Änderungen handeln, um sicherzustellen, dass das neuronale Netz zu generalisieren lernt, statt einfach Bewegungsabläufe in einer spezifischen virtuellen Umwelt auswendig zu lernen. Bei den Änderungen kann es sich aber auch um Ergänzungen der virtuellen Umwelt handeln, die sich grundsätzlich auf das Verhalten der Simulation der technischen Vorrichtung auswirken und das Verhalten der Simulation für das neuronale Netz realistischer und eventuell anspruchsvoller ausgestalten.

Die technische Vorrichtung ist bevorzugt ein Roboter. Unter einem Roboter ist eine beliebige Apparatur zu verstehen, die mittels Ansteuerung durch einen Computer, insbesondere auch durch das neuronale Netz, zu einem eigenständigen komplexen Bewegungsablauf zur Verrichtung einer vordefinierten Tätigkeit befähigt ist. Insbesondere kann es sich bei der technischen Vorrichtung um ein zumindest teilautomatisiertes Fahrzeug zu Land, zu Wasser oder in der Luft handeln, einen Roboterarm, einen Roboter zur Platzierung oder Befestigung von Material und/oder Gegenständen, zur Reinigung von Oberflächen, zur Untersuchung von Räumen oder Oberflächen, zur Aufbringung einer Chemikalie, z.B. eines Reinigungsmittels, eines Desinfektionsmittels, einer Farbe, eines Lacks oder einer Beschichtung, zur Durchführung eines medizinischen Eingriffs, oder einer beliebigen Kombination der vorgenannten Kategorien von Robotern.

Auch das Trainingsziel kann abhängig von der Art der technischen Vorrichtung und der zu lernenden Aufgabe des neuronalen Netzes unterschiedlich ausgestaltet sein. Es kann sich beispielsweise um eine zurückgelegte vordefinierte Wegstrecke auf einem virtuellen Trainingsparcours oder einer virtuellen Teststrecke handeln, um eine vordefinierte Anzahl kollisionsfrei oder innerhalb eines vordefinierten Bewegungsspielraums durchgeführter Bewegungsabläufe, um ein vordefiniertes Zeitintervall, innerhalb dessen das neuronale Netz die erste Simulation ordnungsgemäß und ohne das Auftreten unerwünschter Ereignisse ansteuert, oder ein erreichter vordefinierter Schwellwert einer Belohnungsfunktion, anhand derer das neuronale Netz trainiert wird. Belohnungsfunktionen *(reward functions)* werden regelmäßig zum Training neuronaler Netze eingesetzt, um während des Trainings zu bewerten, ob eine Ausgabe eines neuronalen Netzes eine Verbesserung gegenüber früheren Trainingsphasen darstellt. Belohnungsfunktionen sind derart definiert, dass aus ihrem Ergebnis auslesbar ist, wie gut ein neuronales Netz seine jeweilige Aufgabe bewältigt hat. Neuronen- und Synapsenkonfigurationen, die zu einer Verbesserung geführt haben, werden als Basis für weitere Trainingsschritte beibehalten, und Konfigurationen, die zu einer Verschlechterung geführt haben, verworfen.

Es bestehen unterschiedliche Möglichkeiten, um eine zweite Simulation realistischer auszugestalten als eine erste Simulation. Beispielhaft kann die zweite Simulation mehr mechanische und/oder elektrische Bauteile der technischen Vorrichtung berücksichtigen als die erste Simulation, mehr mechanische Freiheitsgrade berücksichtigen, physikalische Phänomene und Gesetze realitätsnäher oder mit höherer Genauigkeit simulieren, eine größere Anzahl physikalischer Kräfte bzw. Wechselwirkungen berücksichtigen oder eine kleinere Simulationsschrittweite aufweisen.

Die Zeichnungen und deren nachfolgende Beschreibung erläutern die Erfindung anhand eines konkreten Beispiels näher. Es zeigen
- Figur 1: eine schematische Darstellung einer virtuellen Trainingsumgebung;
- Figur 2: ein Flussdiagramm des Trainingsvorgangs;
- Figur 3: eine virtuelle Umwelt für eine Simulation eines hochautomatisierten Fahrzeugs;
- Figur 4: eine Sensorsimulation zur Simulation einer Fahrspurerkennung des hochautomatisierten Fahrzeugs;
- Figur 5: eine erste Simulation des hochautomatisierten Fahrzeugs;
- Figur 6: eine zweite Simulation des hochautomatisierten Fahrzeugs; und
- Figur 7: eine dritte Simulation des hochautomatisierten Fahrzeugs.

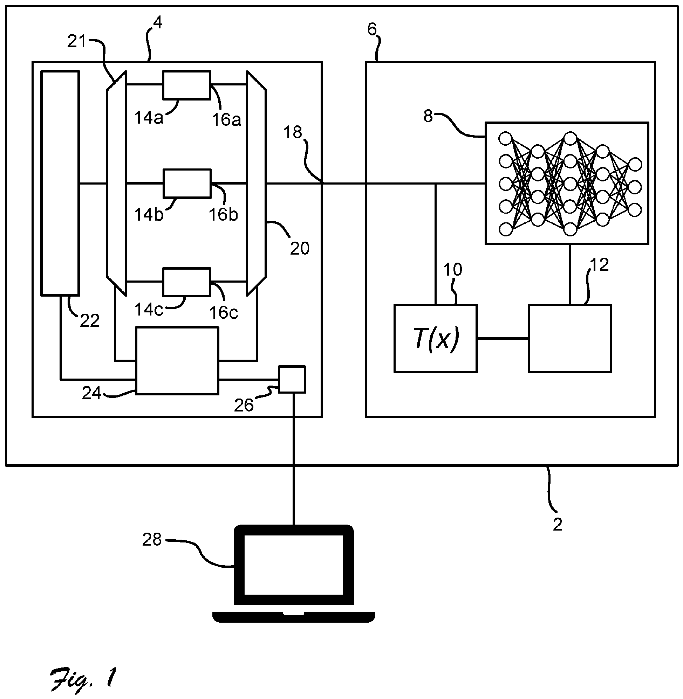

In der Abbildung der Figur 1 ist ein Computersystem 2 dargestellt, auf dem eine virtuelle Trainingsumgebung 4 und eine Entwicklungsumgebung 6 für ein neuronales Netz 8 eingerichtet sind. Ein zur Ansteuerung einer technischen Vorrichtung vorgesehenes und für diese Aufgabe zu trainierendes neuronales Netz 8 ist in die Entwicklungsumgebung 6 eingebettet. Die Entwicklungsumgebung 6 ist logisch von der Trainingsumgebung 4 getrennt und umfasst neben dem neuronalen Netz 8 eine erste Entwicklungsroutine 10 zur Ausführung einer Belohnungsfunktion T und eine zweite Entwicklungsroutine 12, die eingerichtet ist, den Funktionswert der Belohnungsfunktion Tzu überwachen und auf Basis des Funktionswerts die Konfiguration des neuronalen Netzes 8 zu verändern, also die in den Neuronen und Synapsen des neuronalen Netzes 8 hinterlegten Werte zu verändern, um den Funktionswert von *T* auf eine vordefinierte Weise zu optimieren. Der Funktionswert von T hängt von einer Matrix x ab, deren Einträge die virtuelle Trainingsumgebung 4 zuliefert.

Entwicklungsumgebungen wie die dargestellte Entwicklungsumgebung 6 sind im Stand der Technik bekannt und auf dem Markt erhältlich. Beispiele sind PyTorch und Tensorflow.

Die virtuelle Trainingsumgebung 4 umfasst beispielhaft drei Simulationen der technischen Vorrichtung, eine erste Simulation 14a, eine zweite Simulation 14b und eine dritte Simulation 14c. Die erste Simulation 14a umfasst eine erste Datenschnittstelle 16a zur Ansteuerung der ersten Simulation 14 durch das neuronale Netz 8. Das neuronale Netz 8 liest während des Trainings an der ersten Simulation 14a Zustandsdaten aus der ersten Simulation 14a und übermittelt Steuerdaten an die erste Simulation 14a. Analog umfasst die zweite Simulation 14b eine zweite Datenschnittstelle 16b und die dritte Simulation 14c eine dritte Datenschnittstelle 16c. Sowohl die zweite Datenschnittstelle 16b als auch die zweite Datenschnittstelle 16c sind funktional identisch zur ersten Datenschnittstelle 16a. Dadurch sind die drei Simulationen 14a, 14b, 14c unmittelbar gegeneinander austauschbar, und für das neuronale Netz 8 ist nicht direkt feststellbar, welche der drei Simulationen 14a, 14b, 14c es ansteuert.

Die Simulationen der technischen Vorrichtung weisen einen ansteigenden Grad an Realismus auf, d.h. die zweite Simulation 14b ist realistischer ausgestaltet als die erste Simulation 14a, und die dritte Simulation 14c ist realistischer ausgestaltet als die zweite Simulation 14b. Als Folge ihres jeweils höheren Realismus erfordert ein Simulationsdurchlauf der zweiten Simulation 14b mehr von dem Computersystem 2 auszuführende mathematische Operationen als ein Simulationsdurchlauf der ersten Simulation 14a, wodurch die zweite Simulation 14b langsamer als die erste Simulation 14a ist, und ein Simulationsdurchlauf der dritten Simulation 14c erfordert mehr von dem Computersystem 2 durchzuführende mathematische Operationen als ein Simulationsdurchlauf der zweiten Simulation 14b, wodurch die dritte Simulation 14c noch langsamer als die zweite Simulation 14b ist.

Die virtuelle Trainingsumgebung 4 umfasst einen ersten virtuellen Multiplexer 20 zur Einrichtung einer Datenverbindung zwischen einer der drei Simulationen 14a, 14b, 14c und einer Programmierschnittstelle 18 der virtuellen Trainingsumgebung 4. Mittels der Programmierschnittstelle 18 ist die Entwicklungsumgebung 6 derart mit der Trainingsumgebung 4 verbunden, dass durch Stellung des ersten virtuellen Multiplexers 20 wahlweise eine erste Datenverbindung zwischen dem neuronalen Netz 8 und der ersten Simulation 14a, eine zweite Datenverbindung zwischen dem neuronalen Netz 8 und der zweiten Simulation 14b oder eine dritte Datenverbindung zwischen dem neuronalen Netz 8 und der dritten Simulation 14c einrichtbar ist.

Neben den Simulationen 14a, 14b, 14c der technischen Vorrichtung umfasst die virtuelle Trainingsumgebung 4 auch eine virtuelle Umwelt 22 der technischen Vorrichtung, und ein zweiter virtueller Multiplexer 21 ist eingerichtet, eine Datenverbindung zwischen der virtuellen Umwelt 22 und einer der Simulationen 14a, 14b, 14c einzurichten. Die virtuelle Umwelt 22 ist eine Nachbildung einer typischen Umwelt der technischen Vorrichtung, und anhand der vom zweiten virtuellen Multiplexer 21 eingerichteten Datenverbindung ist eine der drei Simulationen 14a, 14b, 14c derart in die virtuelle Umwelt 22 eingebunden, dass die Trainingsumgebung 4 Wechselwirkungen der jeweiligen Simulation 14a, 14c, 14c und der virtuellen Umwelt 22 berücksichtigen kann, die typische Wechselwirkungen der technischen Vorrichtung mit einer realen Umwelt simulieren. Die erste Simulation 14a, die zweite Simulation 14b und die dritte Simulation 14c umfassen jeweils auch zumindest eine Sensorsimulation 30, die einen realen Sensor der technischen Vorrichtung simuliert, zur Erzeugung simulierter Sensordaten 34, aus denen das neuronale Netz 8 Informationen über die virtuelle Umwelt 22 auslesen kann, und zur Übertragung der simulierten Sensordaten an das neuronale Netz 8.

Eine Trainingsfunktionalität 24 ist eingerichtet, den ersten virtuellen Multiplexer 20 und den zweiten virtuellen Multiplexer 22 derart anzusteuern, dass beide Multiplexer zu jedem Zeitpunkt mit derselben Simulation 14a, 14b, 14c der technischen Vorrichtung verbunden sind, sodass zu jedem Zeitpunkt eine durchgehende indirekte Datenverbindung zwischen der virtuellen Umwelt 22 und dem neuronalen Netz 8 besteht, die entweder über die erste Simulation 14a, die zweite Simulation 14b oder die dritte Simulation 14c führt. Die Trainingsfunktionalität 24 ist weiterhin eingerichtet, aus einem Trainingszielspeicher 26 ein erstes Trainingsziel für die erste Simulation 14a, ein zweites Trainingsziel für die zweite Simulation 14b und ein dritten Trainingsziel für die dritte Simulation 14c auszulesen. Ein Bedienrechner 28 mit einer Konfigurationssoftware ist derart mit dem Computersystem 2 verbunden, dass mittels einer Bedienoberfläche der Konfigurationssoftware das erste Trainingsziel, das zweite Trainingsziel und das dritte Trainingsziel durch einen Anwender festlegbar und in dem Trainingszielspeicher 26 hinterlegbar sind.

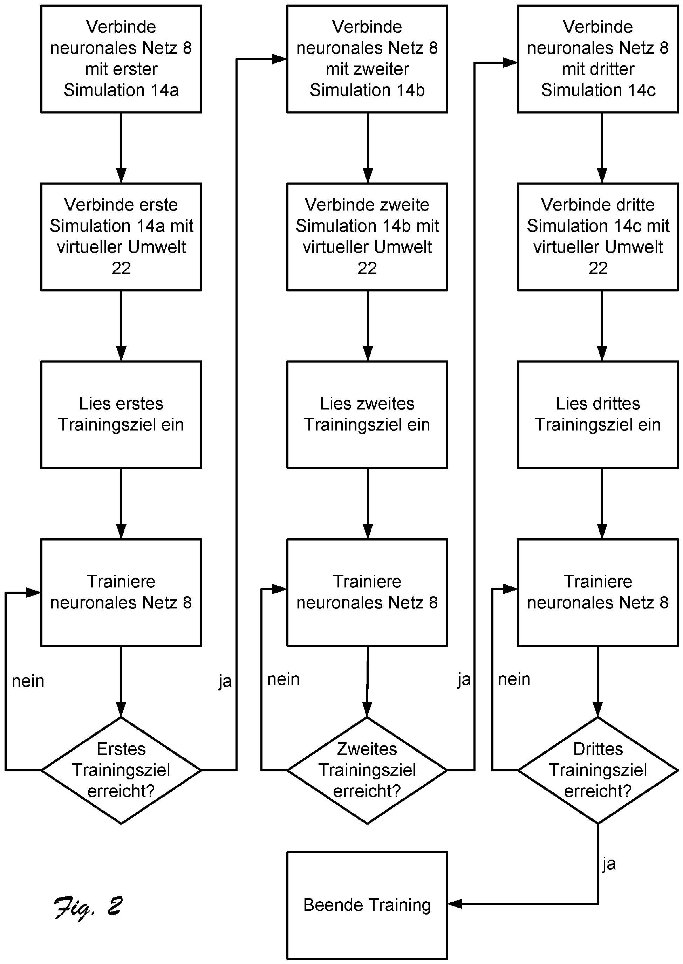

Die Abbildung der Figur 2 zeigt die Verfahrensschritte, die die Trainingsfunktionalität 24 zum Training des neuronalen Netzes 8 durchführt. Zu Anfang verbindet die Trainingsfunktionalität 24 durch Ansteuerung des ersten virtuellen Multiplexers 20 die erste Simulation 14a mit dem neuronalen Netz 8 und richtet auf diese Weise die erste Datenverbindung ein. Anschließend verbindet die Trainingsfunktionalität 24 durch Ansteuerung des zweiten virtuellen Multiplexers 21 die erste Simulation 14a mit der virtuellen Umwelt 22. Damit hat die Trainingsfunktionalität eine durchgehende, durch die erste Simulation 14a vermittelte Datenverbindung zwischen dem neuronalen Netz 8 und der virtuellen Umwelt 22 eingerichtet, und das neuronale Netz 8 kann die erste Simulation 14a in der virtuellen Umwelt 22 ansteuern. Die Trainingsfunktionalität 24 startet an dieser Stelle das Training des neuronalen Netzes 8 durch Ansteuerung der ersten Simulation 14a durch das neuronale Netz 8, gleicht während des Trainings fortlaufend den Trainingsfortschritt des neuronalen Netzes 8 mit dem Trainingsziel ab und setzt das Training fort, bis das erste Trainingsziel erreicht ist.

Wegen der hohen Laufgeschwindigkeit der ersten Simulation 14a ist das erste Trainingsziel in relativ kurzer Zeit erreicht. Vorteilhaft sind die Ausgestaltung der ersten Simulation 14a und das erste Trainingsziel so gewählt, dass das neuronale Netz 8 nach Erreichung des ersten Trainingsziel die Grundlagen der Ansteuerung der technischen Vorrichtung gelernt hat.

Nach Erreichung des ersten Trainingsziels verbindet die Trainingsfunktionalität 24 durch Ansteuerung des ersten virtuellen Multiplexers 20 das neuronale Netzwerk 8 mit der zweiten Simulation 14b. Auf diese Weise trennt die Trainingsfunktionalität 24 die erste Datenverbindung und ersetzt die erste Datenverbindung durch eine zweite Datenverbindung zwischen dem neuronalen Netz 8 und der zweiten Simulation 14b. Anschließend verbindet die Trainingsfunktionalität 24 durch Ansteuerung des zweiten virtuellen Multiplexers 21 die zweite Simulation 14b mit der virtuellen Umwelt. Die zweite Simulation ist jetzt auf die gleiche Weise in die virtuelle Umwelt 22 eingebunden und durch das neuronale Netz 8 ansteuerbar wie vorher die erste Simulation 14a. Auf analoge Weise startet und überwacht die Trainingsfunktionalität 24 das Training und setzt das Training fort, bis das zweite Trainingsziel erreicht ist. Auf wiederum analoge Weise erfolgt noch eine dritte Trainingsphase mit der dritten Simulation 14c bis zur Erreichung des dritten Trainingsziels. Die Erreichung des dritten Trainingsziels veranlasst die Trainingsfunktionalität 24 zur Beendigung des Trainings.

Die finale dritte Simulation 14c ist vorzugsweise eine sehr komplexe und realitätsnahe Simulation der technischen Vorrichtung, und das dritte Trainingsziel und die Ausgestaltung der dritten Simulation sind vorzugsweise so gewählt, dass das neuronale Netz 8 nach Erreichung des finalen dritten Trainingsziels eine sichere Ansteuerung der technischen Vorrichtung auch unter seltenen Ausnahmebedingungen gelernt hat.

Nach Beendigung des Trainings in der virtuellen Trainingsumgebung 4 kann eine Datenverbindung zwischen dem neuronalen Netz und der technischen Vorrichtung eingerichtet werden, um die technische Vorrichtung in einer realen Umwelt von dem neuronalen Netz 8 ansteuern zu lassen, entweder zur Validierung des in der virtuellen Trainingsumgebung 4 durchgeführten Trainings oder zu dessen Fortsetzung in einer realen Umwelt.

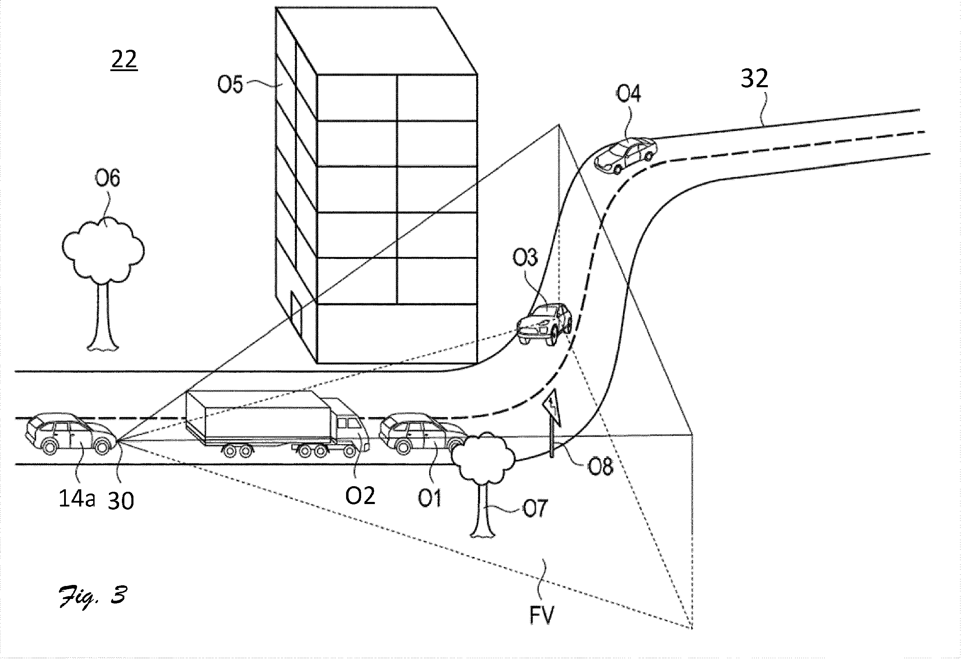

Die Abbildung der Figur 3 zeigt eine eine virtuelle Trainingsumgebung für ein Training neuronaler Netze zum Ansteuern eines hochautomatisierten Straßenfahrzeugs. Die virtuelle Umwelt 22 bildet eine typische Umwelt eines hochautomatisierten Straßenfahrzeugs nach und umfasst zu diesem Zweck eine Vielzahl statischer und beweglicher 3D-Objekte O1, ..., O8 wie Fahrzeuge, Vegetation, Verkehrsschilder und Gebäude, außerdem eine virtuelle Teststrecke 32, die eine Straße nachbildet. Die technische Vorrichtung ist in dem dargestellten Beispiel ein Straßenfahrzeug, und eine erste Simulation 14a des Straßenfahrzeugs ist als virtueller Straßenverkehrsteilnehmer in die virtuelle Umwelt 22 eingebunden, sodass die erste Simulation 14a sich auf die gleiche Weise in der virtuellen Umwelt 22 bewegt wie ein reales Straßenfahrzeug in einer realen Straßenszene.

Die erste Simulation 14a, ebenso wie die zweite Simulation 14b und die dritte Simulation 14c, umfasst eine Sensorsimulation 30, der eine Sensorposition in der virtuellen Umwelt 22 zugeordnet ist, im dargestellten Fall an der Frontseite des simulierten Straßenfahrzeugs 14a. Die Sensorsimulation 30 simuliert beispielhaft eine intelligente Kamera zur Erkennung von Fahrspuren. Der Sensorsimulation 30 ist in der virtuellen Umwelt 22 ein Sichtfeld FV zugeordnet. Fahrspuren sind für die Sensorsimulation 30 sichtbar, sofern sie innerhalb des Sichtfeldes FV liegen und aus der Perspektive der Sensorsimulation 30 nicht durch 3D-Objekte O1, ..., O8 oder die Topographie der virtuellen Umwelt 22 verdeckt sind.

Das neuronale Netz 8 soll in der virtuellen Umwelt für die seitliche Steuerung des Straßenfahrzeugs 14a durch Ansteuerung des Lenkwinkels trainiert werden. Andere Aspekte der Ansteuerung des Straßenfahrzeugs 14a, wie Beschleunigung, Bremsung und Abstandsregelung, werden von Routinen der ersten Simulation 14a bzw. der zweiten Simulation 14b bzw. der dritten Simulation 14c übernommen und unterliegen nicht dem Einfluss des neuronalen Netzes 8.

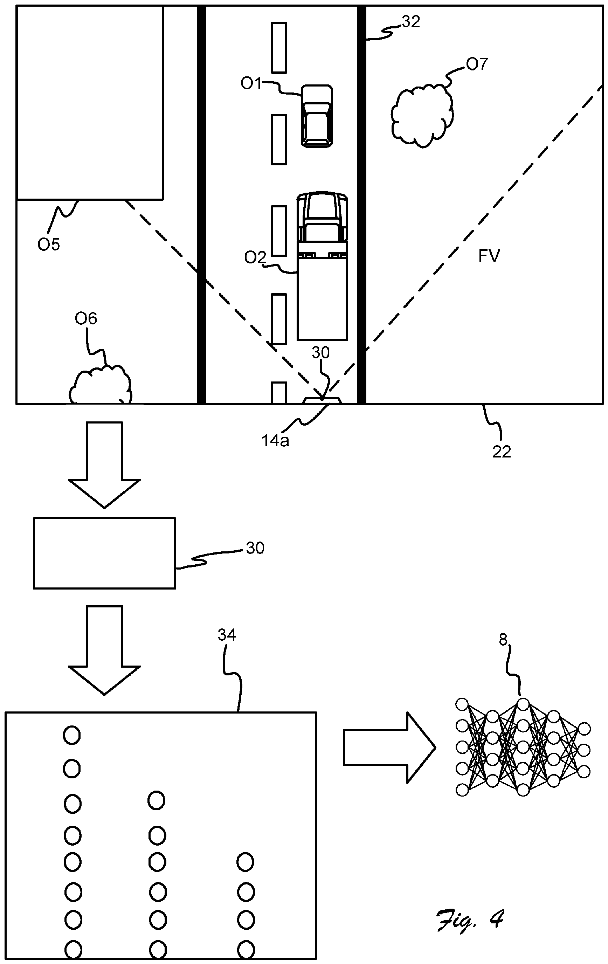

Die Abbildung der Figur 4 zeigt beispielhaft die Arbeitsweise der Sensorsimulation 30. Die Sensorsimulation erhält von der virtuellen Trainingsumgebung 2 als Eingabe eine Beschreibung der virtuellen Umwelt 22, beispielsweise in Form einer Objektliste, erzeugt aus der Beschreibung simulierte Sensordaten 34 und überträgt die simulierten Sensordaten 34 mittels der Programmierschnittstelle 18 an das neuronale Netz 8. Die Sensordaten 34 bestehen in dem dargestellten Beispiel aus Punktreihen, wobei jede Punktreihe einen für die intelligente Kamera sichtbaren Ausschnitt einer Fahrspur repräsentiert, und wobei jeder Punkt durch drei Raumkoordinaten repräsentiert ist. Die Punktreihen geben einen Bewegungsspielraum für das simulierte Straßenfahrzeug 14a in der virtuellen Umwelt 22 vor. Das erste Trainingsziel des neuronalen Netzes 8 für die erste Simulation 14a besteht darin, die erste Simulation 14a derart anzusteuern, dass das von der ersten Simulation 14a simulierte Straßenfahrzeug auf der virtuellen Teststrecke 32 eine vordefinierte Wegstreckte zurücklegt, beispielsweise eine Wegstrecke von fünf Kilometern, ohne auf der Wegstrecke mit einem der Punkte aus einer der Punktreihen in den simulierten Sensordaten 34 zu kollidieren. Die Trainingsfunktionalität 24 ist zu diesem Zweck eingerichtet, die zurückgelegte Strecke des von der ersten Simulation 14a simulierten Straßenfahrzeugs auf der virtuellen Teststrecke 32 zu überwachen und Kollisionen des Straßenfahrzeugs mit Fahrbahnbegrenzungen zu erkennen.

Die Punktreihen in den Sensordaten 34 sind ein Beispiel für sogenannte Ground-Truth-Sensordaten. Sie simulieren Sensordaten, wie sie nach einer intelligenten Auswertung der Rohdaten eines bildgebenden Sensors vorliegen, und sind auf Basis einer virtuellen Umwelt 22 besonders einfach zu simulieren. Je nachdem, zur Verarbeitung welcher Art von Sensordaten 34 das neuronale Netz 8 trainiert werden soll, können die simulierten Sensordaten 34 aber grundsätzlich beliebig ausgestaltet sein, bspw. als Objektliste oder als Rohdaten einer Kamera, einer thermischen Kamera, eines Radars, eines Lidars oder einer Echoortung. Die simulierten Sensordaten 34 können auch von einer realen Kamera stammen, die auf einen Bildschirm gerichtet ist, auf dem in Echtzeit ein Bild der virtuellen Umwelt 22 aus Sicht der Sensorsimulation 30 gerendert wird. Eine Übersicht über die unterschiedlichen Möglichkeiten der Sensorsimulation und die dafür vorzunehmenden Freischnitte am Beispiel einer Kamerasimulation findet der Fachmann in dem Fachaufsatz "Full Spectrum Camera Simulation for Reliable Virtual Development and Validation of ADAS and Automated Driving Applications" von René Molenaar et al., 2015 IEEE Intelligent Vehicles Symposium (IV).

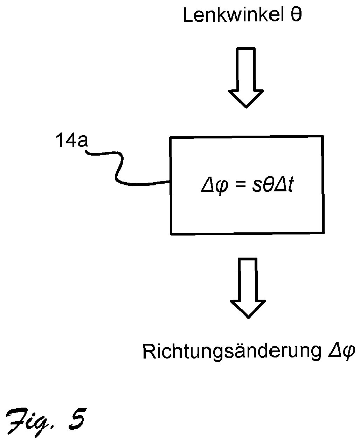

Die Abbildung der Figur 5 zeigt eine mögliche Ausgestaltung der ersten Simulation 14a des Straßenfahrzeugs. Die erste Simulation erhält als Eingabe vom neuronalen Netz 8 einen Lenkwinkel θ und ordnet dem Lenkwinkel θ anhand einer einfachen linearen Funktion, durch Multiplikation mit einer konstanten Lenkempfindlichkeit s und der Simulationsschrittweite Δt, eine Richtungsänderung Δϕ des Straßenfahrzeugs auf der zweidimensionalen Ebene der virtuellen Teststrecke 32 zu. Anhand der Richtungsänderung Δϕ errechnet die erste Simulation 14a die neue Fahrtrichtung im nachfolgenden Simulationsschritt. Die erste Simulation 14a ist damit ein extrem vereinfachtes Modell des Straßenfahrzeugs, in dem das Straßenfahrzeug ein starrer Körper ohne Rotationsfreiheitsgrade ist, der sich zu jedem Zeitpunkt parallel zum Untergrund auf einem perfekten Kreisbogen bewegt, dessen Krümmung in linearer Weise durch den Lenkwinkel θ vorgegeben ist. Anhand der ersten Simulation 14a erlernt das neuronale Netz 8 die Grundlagen der Quersteuerung des Straßenfahrzeugs.

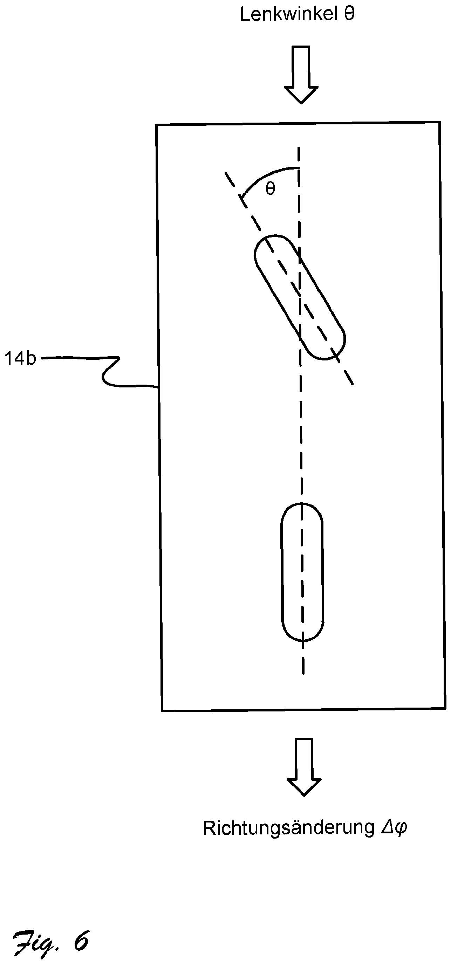

Nach Erreichung des ersten Trainingsziels wird die erste Simulation 14a, wie vorhergehend anhand der Figur 1 beschrieben, durch eine zweite Simulation 14b ersetzt, welche in der Abbildung der Figur 6 dargestellt ist. Genau wie die erste Simulation 14a erhält die zweite Simulation vom neuronalen Netz 8 als Eingabe einen Lenkwinkel θ und ermittelt auf dessen Basis eine Richtungsänderung Δϕ, die für das neuronale Netz 8 durch die an das neuronale Netz 8 übertragenen Sensordaten 34 sichtbar wird, wobei die Ausgestaltung der Sensordaten 34 gegenüber der ersten Simulation 14a unverändert bleibt. Die zweite Datenschnittstelle 16b, mittels derer das neuronale Netz 8 Zustandsdaten (hier: Sensordaten 34) aus der zweiten Simulation 14b ausliest und Steuerdaten (hier: Lenkwinkel θ) an die zweite Simulation 14b übermittelt, ist also identisch zu der ersten Datenschnittstelle 16a der ersten Simulation. Die Ersetzung der ersten Simulation 14a durch die zweite Simulation 14b ist für das neuronale Netz demnach nicht direkt feststellbar. Die zweite Simulation 14b ist aber realistischer ausgestaltet als die erste Simulation 14b, wobei aber auch die zweite Simulation 14b gegenüber der Realität noch stark vereinfacht ist. Die zweite Simulation 14b ist ein sogenanntes Fahrradmodell *(kinematic bicycle model),* ein dem Fachmann bekanntes Grundlagenmodell zur einfachen Simulation eines vierrädrigen Landfahrzeugs. Das Fahrradmodell fasst die zwei jeweils auf einer Höhe liegenden Räder zu einem Rad zusammen, sodass zwei Räder auf einer gemeinsamen Längsachse angeordnet sind, wobei dem vorderen Rad ein Anstellwinkel gemäß dem Lenkwinkel θ zugeordnet ist, aus dem in Zusammenwirkung mit dem starren hinteren Rad die Richtungsänderung Δϕ berechnet wird. Das Fahrradmodell berücksichtigt mehr Freiheitsgrade als die erste Simulation 14a, nämlich die Drehbarkeit der vorderen Räder, und außerdem mehr physikalische Phänomene, beispielsweise die räumliche Ausdehnung des Fahrzeugs oder die Existenz eines Massenschwerpunktes des Fahrzeugs. Dadurch sind für einen Simulationsdurchlauf der zweiten Simulation 14b mehr mathematische Operationen abzuarbeiten als für einen Simulationsdurchlauf der ersten Simulation 14a. Das Training des neuronalen Netzes 8 ist dadurch gegenüber dem Training an der ersten Simulation 14a insgesamt verlangsamt. Die zweite Simulation 14b vernachlässigt aber noch immer eine Vielzahl von Phänomenen, z.B. Haftungsverlust der Reifen, und Freiheitsgraden des Fahrzeugs. Dadurch ist auch die zweite Simulation 14b hinreichend schnell, um auch in der zweiten Trainingsphase schnelle Trainingserfolge zu erzielen.

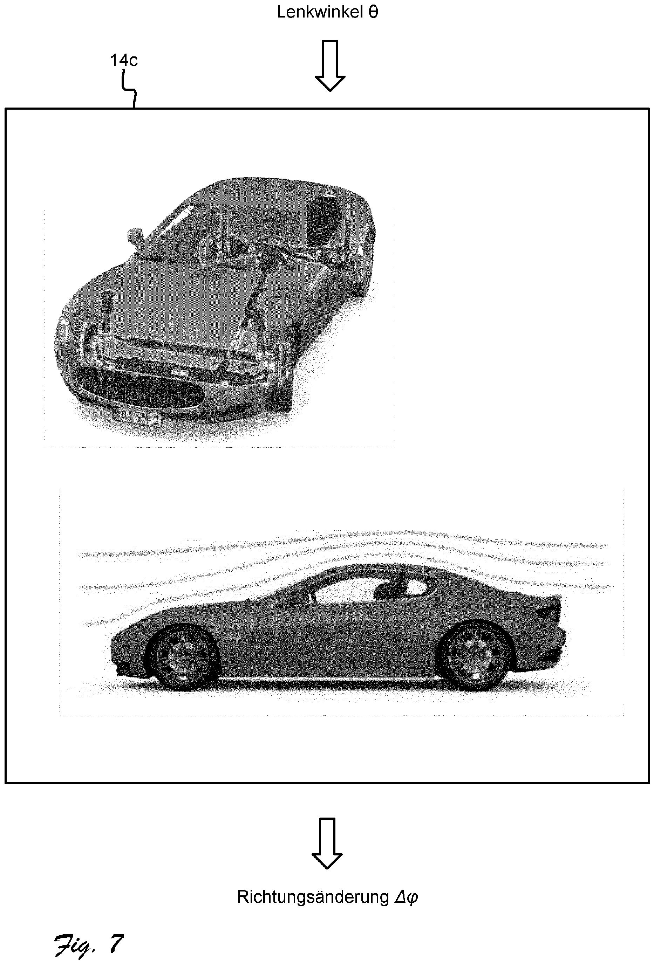

Der zweiten Simulation 14b ist ein zweites Trainingsziel zugeordnet, das mit dem ersten Trainingsziel identisch sein kann. Nach Erreichung des Trainingsziels wird die zweite Simulation 14b wie vorhergehend beschrieben durch eine dritte Simulation 14c ersetzt, die in der Abbildung der Figur 7 dargestellt ist. Die dritte Simulation 14c ist eine komplexe Simulation, die die technischen und mechanischen Vorgänge in einem realen Straßenfahrzeug mit einem hohen Detailgrad nachbildet. Sie umfasst eine vollständige Simulation des Antriebsstrangs und aller Federungen des Fahrzeugs, eine Simulation des Motors mit einem realitätsnahen Beschleunigungs- und Bremsverhalten, ein realistisches Reifenmodell, Nick- und Wankbewegungen des Fahrzeugs mit Aufsetzen der Karosserie auf der Straße, Kontaktverlust einzelner oder aller Reifen zur Straße, sowie aerodynamische Krafteinwirkung auf das Fahrzeug. Die dritte Datenschnittstelle 16c der dritten Simulation 14c ist wiederum identisch zur zweiten Datenschnittstelle 16b und zur ersten Datenschnittstelle 16a.

Durch den hohen Detailgrad der dritten Simulation 14c ist das Training mit der dritten Simulation 14c wesentlich zeitaufwendiger als mit der zweiten Simulation 14b und der ersten Simulation 14a, aber das Fahrverhalten der dritten Simulation 14c ähnelt in hohem Maße dem tatsächlichen Fahrverhalten eines Straßenfahrzeugs. Dadurch hat das neuronale Netz nach Erreichung des dritten Trainingsziels ein hohes Trainingsniveau erreicht und kann versuchsweise ein reales Straßenfahrzeug auf einer realen Teststrecke ansteuern.

## Patentansprüche

1. Computerimplementiertes Verfahren zum Training eines neuronalen Netzes (8) zur Ansteuerung einer technischen Vorrichtung, die folgenden Verfahrensschritte umfassend:
Einrichtung einer ersten Datenverbindung zwischen dem neuronalen Netz (8) und einer virtuellen ersten Simulation (14a) der technischen Vorrichtung mittels einer ersten Datenschnittstelle (16a) der ersten Simulation (14a) zur Auslesung von Zustandsdaten aus der ersten Simulation (14a) und zur Übermittlung von Steuerdaten an die erste Simulation (14a);
Festlegung eines ersten Trainingsziels für eine Ansteuerung der ersten Simulation;
Training des neuronalen Netzes (8) durch Ansteuerung der ersten Simulation (14a) durch das neuronale Netz (8) und Abgleich des Trainingsfortschritts des neuronalen Netzes (8) mit dem ersten Trainingsziel;
**gekennzeichnet durch** eine Trennung der ersten Datenverbindung nach Erreichung des ersten Trainingsziels und eine anschließende Einrichtung einer zweiten Datenverbindung zwischen dem neuronalen Netz (8) und einer virtuellen zweiten Simulation (14b) der technischen Vorrichtung, die realistischer ausgestaltet ist als die erste Simulation (14a) und durch ihren höheren Realismus mehr mathematische Operationen für einen Simulationsdurchlauf erfordert als die erste Simulation (14a), mittels einer zweiten Datenschnittstelle (16b) der zweiten Simulation (14b) zur Auslesung von Zustandsdaten aus der zweiten Simulation (14b) und zur Übermittlung von Steuerdaten an die zweite Simulation (14b) ; und
Training des neuronalen Netzes (8) durch Ansteuerung der zweiten Simulation (14b) durch das neuronale Netz (8).

2. Verfahren gemäß Anspruch 1, wobei die erste Datenschnittstelle (16a) und die zweite Datenschnittstelle (16b) identisch ausgestaltet sind.

3. Verfahren gemäß Anspruch 1, mit den Verfahrensschritten:
Erzeugung simulierter Sensordaten (34) , die Informationen über eine virtuelle Umwelt (22) der technischen Vorrichtung enthalten;
Übermittlung der simulierten Sensordaten (34) an das neuronale Netz (8);
Training des neuronalen Netzes (8) zur Auswertung der Sensordaten (34) und zur Berücksichtigung der Sensordaten (34) bei der Ansteuerung der ersten Simulation (14a) bzw. der zweiten Simulation (14b).

4. Verfahren gemäß einem der vorhergehenden Ansprüche, wobei die technische Vorrichtung ein Roboter ist, insbesondere zumindest einer der folgenden Kategorien angehörig:
- ein Fahrzeug;
- ein Roboterarm;
- ein Roboter zur Platzierung oder Befestigung von Material und/oder Gegenständen;
- ein Roboter zur Reinigung von Oberflächen;
- ein Roboter zur Untersuchung von Räumen oder Oberflächen;
- ein Roboter zur Aufbringung einer Chemikalie, z.B. eines Reinigungsmittels, eines Desinfektionsmittels, einer Farbe, eines Lacks oder einer Beschichtung;
- ein Roboter zur Durchführung eines medizinischen Eingriffs.

5. Verfahren gemäß Anspruch 4, wobei das erste Trainingsziel zumindest einer der folgenden Kategorien von Trainingszielen angehört:
- eine zurückgelegte Wegstrecke auf einem virtuellen Trainingsparcours oder einer virtuellen Teststrecke (32);
- eine Anzahl kollisionsfrei oder innerhalb eines vordefinierten Bewegungsspielraums durchgeführter Bewegungsabläufe;
- ein Zeitintervall, innerhalb dessen das neuronale Netz (8) die erste Simulation (14a) ordnungsgemäß und ohne das Auftreten unerwünschter Ereignisse ansteuert;
- ein erreichter Schwellwert einer Belohnungsfunktion.

6. Verfahren gemäß einem der vorhergehenden Ansprüche, wobei die zweite Simulation (14b)
- mehr mechanische und/oder elektrische Bauteile der technischen Vorrichtung berücksichtigt als die erste Simulation (14a) und/oder
- mehr mechanische Freiheitsgrade berücksichtigt als die erste Simulation (14a) und/oder
- physikalische Phänomene und/oder Gesetze realitätsnäher und/oder mit höherer Genauigkeit simuliert als die erste Simulation (14a) und/oder
- eine größere Anzahl physikalischer Kräfte und/oder Wechselwirkungen berücksichtigt als die erste Simulation (14a) und/oder
- eine kleinere Simulationsschrittweite aufweist als die erste Simulation (14a).

7. Verfahren gemäß einem der vorhergehenden Ansprüche, mit den Verfahrensschritten :
Festlegung eines zweiten Trainingsziels für eine Ansteuerung der zweiten Simulation (14b);
Abgleich, während der Ansteuerung der zweiten Simulation (14b), des Trainingsfortschritts des neuronalen Netzes (8) mit dem zweiten Trainingsziel;
Einrichtung einer physischen Datenverbindung zwischen dem neuronalen Netz (8) und der technischen Vorrichtung nach Erreichung des zweiten Trainingsziels;
Ansteuerung der technischen Vorrichtung durch das neuronale Netz (8).

8. Virtuelle Trainingsumgebung (4) zum Training eines neuronalen Netzes (8) zur Ansteuerung einer technischen Vorrichtung, die virtuelle Trainingsumgebung (4) umfassend:
eine erste Simulation (14a) der technischen Vorrichtung mit einer ersten Datenschnittstelle (16a) zur Auslesung von Zustandsdaten aus der ersten Simulation (14a) und zur Übermittlung von Steuerdaten an die erste Simulation (14a);
eine Programmierschnittstelle (18) zur Einrichtung einer ersten Datenverbindung zwischen dem neuronalen Netz (8) und der ersten Simulation (14a); und
eine Trainingsfunktionalität (24), die ausgestaltet ist, ein Trainingsziel für eine Ansteuerung der ersten Simulation (14a) durch das neuronale Netz (8) festzulegen und den Trainingsfortschritt des neuronalen Netzes (8) mit dem Trainingsziel abzugleichen;
**dadurch gekennzeichnet, dass** die virtuelle Trainingsumgebung (4) eine zweite Simulation (14b) der technischen Vorrichtung umfasst, die realistischer ausgestaltet ist als die erste Simulation (14a) und durch ihren höheren Realismus mehr mathematische Operationen für einen Simulationsdurchlauf erfordert als die erste Simulation (14a), mit einer zweiten Datenschnittstelle (16b)zur Auslesung von Zustandsdaten aus der zweiten Simulation (14b) und zur Übermittlung von Steuerdaten an die zweite Simulation (14b);
die Trainingsfunktionalität (24) ausgestaltet ist, die erste Datenverbindung (14b) nach Erreichung des Trainingsziels zu trennen und durch eine zweite Datenverbindung zwischen dem neuronalen Netz (8) und der zweiten Simulation (14b) zu ersetzen und
das neuronale Netz (8) durch Ansteuerung der zweiten Simulation (14b) durch das neuronale Netz (8) zu trainieren.

9. Virtuelle Trainingsumgebung (4) gemäß Anspruch 8, in der die erste Datenschnittstelle (16a) und die zweite Datenschnittstelle (16b) identisch ausgestaltet sind.

10. Virtuelle Trainingsumgebung (4) gemäß Anspruch 8, die eine virtuelle Umwelt (22) der technischen Vorrichtung und eine Sensorsimulation (30) umfasst
und eingerichtet ist, mittels der Sensorsimulation (30) simulierte Sensordaten (34), die Informationen über die virtuelle Umwelt (22) enthalten, zu erzeugen und die simulierten Sensordaten (34) mittels der Programmierschnittstelle (18) an das neuronale Netz (8) zu übertragen.

11. Virtuelle Trainingsumgebung (4) gemäß einem der Ansprüche 8 bis 10, wobei die technische Vorrichtung ein Roboter ist, insbesondere zumindest einer der folgenden Kategorien angehörig:
- ein Fahrzeug;
- ein Roboterarm;
- ein Roboter zur Platzierung oder Befestigung von Material und/oder Gegenständen;
- ein Roboter zur Reinigung von Oberflächen;
- ein Roboter zur Untersuchung von Räumen oder Oberflächen;
- ein Roboter zur Aufbringung einer Chemikalie, z.B. eines Reinigungsmittels, eines Desinfektionsmittels, einer Farbe, eines Lacks oder einer Beschichtung;
- ein Roboter zur Durchführung eines medizinischen Eingriffs.

12. Virtuelle Trainingsumgebung (4) gemäß Anspruch 11, wobei das Trainingsziel zumindest einer der folgenden Kategorien von Trainingszielen angehört:
- eine zurückgelegte Wegstrecke auf einem virtuellen Trainingsparcours oder einer virtuellen Teststrecke;
- eine Anzahl kollisionsfrei oder innerhalb eines vordefinierten Bewegungsspielraums durchgeführter Bewegungsabläufe;
- ein Zeitintervall, innerhalb dessen das neuronale Netz die erste Simulation ordnungsgemäß und ohne das Auftreten unerwünschter Ereignisse ansteuert;
- ein erreichter Schwellwert einer Belohnungsfunktion.

13. Virtuelle Trainingsumgebung (4) gemäß einem der Ansprüche 8 bis 12, in der die zweite Simulation (14b)
- mehr mechanische und/oder elektrische Bauteile der technischen Vorrichtung berücksichtigt als die erste Simulation (14a) und/oder
- mehr mechanische Freiheitsgrade berücksichtigt als die erste Simulation (14a) und/oder
- physikalische Phänomene und/oder Gesetze realitätsnäher und/oder mit höherer Genauigkeit simuliert als die erste Simulation (14a) und/oder
- eine größere Anzahl physikalischer Kräfte und/oder Wechselwirkungen berücksichtigt als die erste Simulation (14a) und/oder
eine kleinere Simulationsschrittweite aufweist als die erste Simulation (14a).
